(19) Europäisches Patentamt
European Patent Office
Office européen des brevets

(11) Publication number: **0 297 795**
**A2**

(12) # EUROPEAN PATENT APPLICATION

(21) Application number: **88305801.8**

(22) Date of filing: **23.06.88**

(51) Int. Cl.$^4$: **C08J 7/12 , B05D 3/04 , C09D 3/81 , C08J 5/12 , C08J 7/04**

(30) Priority: **02.07.87 US 69082**

(43) Date of publication of application: **04.01.89 Bulletin 89/01**

(84) Designated Contracting States: **DE FR GB IT**

(71) Applicant: **THE STANDARD OIL COMPANY**
**200 Public Square, 36-F-3454**
**Cleveland Ohio 44114-2375(US)**

(72) Inventor: **Bartoszek-Loza, Rosemary**
**6570 Arbordale**
**Solon, OH 44139(US)**
Inventor: **Prohaska, George W.**
**580 Iroquois Trail**
**Willoughby OH 44094(US)**
Inventor: **McCaul, Joseph**
**8733 Applewood Drive**
**Mentor, OH 44060(US)**

(74) Representative: **Scott, Susan Margaret et al**
**BP INTERNATIONAL LIMITED Patents & Agreements Division Chertsey Road**
**Sunbury-on-Thames Middlesex TW16 7LN(GB)**

(54) **Bonding of high nitriles onto surface plasma treated plastics.**

(57) A process to adhere nitrile films or coatings onto a plastic material comprising subjecting the surface of a plastic material selected from the group consisting of polycarbonate, polybutadiene, rubber, polyethylene, polypropylene, polytetraflouroethylene, polyacrylonitrile, polyvinylchloride, polyvinylacetate, polymethylmethacrylate, polstyrene, cellophane, cellulose acetate comonomer, polyamides, polybutylene, polyester, and combinations thereof to a reactive gas plasma selected from the group consisting of water, oxygen, hydrogen and combinations thereof, under defined conditions, to surface modify the plastic; applying a nitrile composition onto the surface of the modified material; and curing the nitrile composition by irradiation wherein the irradiation is in the range from about 2200Å to about 14,000Å.

EP 0 297 795 A2

# BONDING OF HIGH NITRILES ONTO SURFACE PLASMA TREATED PLASTICS

The present invention is directed generally to the adhesive bonding of high nitrile coatings onto plastic surfaces that have been treated by a reactive gas plasma.

There is a need to improve the resistance of plastics to moisture, oxygen and chemical resistance. It has been discovered that coating nitrile films onto plastic surfaces can overcome deficiencies of lack of chemical resistance, poor barrier properties and abrasion resistance of plastics used in engineering.

Commercial processes have employed ultraviolet cure processing for plastic substrates. Further, an ultraviolet cure followed by a thermal cure has been employed to coat polycarbonates. U.S. patent 4,557,975 describes a photocure process for coating acrylate-acrylonitrile onto plastic articles.

There exists a need to improve the adhesion of high nitrile coatings onto to plastic substrates, so that the plastic material has improved protection to the environment.

Adhesion of coatings onto plastic material have been accomplished by some of the following processes; thermal cures, photocurable cures, lamination, and adhesives. U.S. 3,853,657 discloses the bonding of polyethylene terephthalate fibers induced by low-temperature plasmas.

However, there exists a need to improve the adhesive bonding characteristics of high nitrile resins to plastics.

The process of employing a reactive gas plasma to modify the surface of plastics of this invention allows for strong adhesive bonding of high nitrile coating onto plastic. Further the photocured high nitrile coating imparts solvent protection to the plastic. Furthermore, the process of the invention allows for simplicity of approach, freedom of distortion of the plastic substrate from high temperatures, excellent solvent resistance and excellent adhesion.

It is an object of this invention to provide a method to surface treat plastic substrates with a reactive gas plasma so as to improve the adhesive bonding of a nitrile resin to the treated plastic surface.

The present invention provides a process to adhere nitrile films or coatings onto a plastic material comprising subjecting the surface of a plastic material selected from the group consisting of polycarbonate, polybutadiene, rubber, polyethylene, polypropylene, polytetraflouroethylene, polyacrylonitrile, polyvinylchloride, polyvinylacetate, polymethylmethacrylate, polystyrene, cellophane, cellulose acetate comonomer, polyamides; polybutylene, polyester, and combinations thereof to a reactive gas plasma selected from the group consisting of water, oxygen, hydrogen and combinations thereof, in a containment vessel containing a vacuum chamber containing an anode and cathode, and wherein said plastic is in contact with said anode and further wherein said reactive vapor plasma is initiated by evacuating the vacuum chamber to a pressure of 0.13Pa ($10^{-3}$ torr) to about 1.3 x $10^{-8}$ Pa ($10^{-10}$ torr) and applying a voltage of about 0.5 volts to about 1000 volts with an alternating current of about 150kHz to about 2 GHz such that the net power generated is about 10 watts to about 10 kilowatts power between the cathode and the anode and further wherein the treatment time is about 1 minute to about 60 minutes to surface modify the plastic; applying a nitrile composition onto the surface of the modified material; and curing the nitrile composition by irradiation wherein the irradiation is in the range from about 2200Å to about 14,000Å. Curing may be carried out to a desired level of tackiness and preferably to a tack free state. The tack free coating is highly adherent to the plastic material and imparts excellent solvent protect to the plastic material.

The high nitrile film or coating on the plastic imparts solvent protection and chemical and environmental resistance to protect the plastic material. Further, the radiation cure occurs at ambient temperature preventing heat distortion or destruction of the plastic substrate.

The high nitrile film or coating on plastics can be used for packaging material, the automotive industry and wherever plastic materials are replacing metals and/or glass.

All plastics such as sheets, molded item or films are suitable for use in this invention. One or both surfaces of the plastic can be treated by this process.

The plastics employed are polycarbonate, polybutadiene, rubber, polyethylene, polypropylene, polytetrafluoroethylene, polyacrylonitrile, polyvinylchloride, polyvinylacetate, polymethylmethacrylate, polstyrene, cellophane, cellulose acetate comonomer, polyamides, polybutylene, polyester, and the derivatives of the above mentioned plastics. The preferred plastic employed in this invention is polycarbonate.

A typical plastic employed is a polycarbonate. The polycarbonates as a class of compounds and their manufacture are well known and recognised by those experienced in the art. The polycarbonates heretofore mentioned are for the sake of example only and are not to be construed as limiting the scope of the invention.

Illustrative polycarbonates are unbranched or branched homopolymers and copolymers and mixtures thereof that are prepared by reacting a dihydric phenol with a carbonate precursor. Typical of some of the

dihydric phenols that may be employed to make the substrates of this invention are (2,2-bis(4-hydroxyphenyl)propane), bis(4-hydroxyphenyl)methane, 2,2-bis(4-hydroxy-3-methlyphenyl)propane, 3,3-bis(4-hydroxyphenyl)pentane, 2,2-bis(3,5-dichloro-4-hydroxyphenyl)propane, 2,2-bis(3-5-dibromo-4-hydroxyphenyl)propane, 2,2-bis(3-5-dibromo-4-hydroxyphenyl)propane, bis(3-chloro-4-hydroxyphenyl)propane, bis-(3-chloro-4-hydroxyphenyl)methane and the like.

In addition to using a single dihydric phenol, it is possible to employ two or more different dihydric phenols or a copolymer of a dihydric phenol with a glycol or with hydroxy or acid terminated polyester, or with a dibasic acid in the event of carbonate copolymer or interpolymer rather than a homopolymer is desired for use as a substrate. Also employed in the practice of this invention may be blends of any of the above materials to provide the polycarbonate substrate.

The carbonate precursor used to make typical polycarbonate substrates may be either a carbonyl halide, a carbonate ester or a haloformate. Specific carbonate precursors are well known in the art. Carbonyl chloride, also known as phosgene, is preferred.

Also included herein are the polymeric derivatives of a dihydric phenol, a dicarboxylic acid, carbonic acid and the like.

The surface modification of the plastic is effected by a reaction of the plastic with a reactive gas plasma. The reactive gas plasma can be employed using a single gas or a combination of gases. The reactive gas plasma can be generated from liquids, solids and/or gases. Most preferred are oxygen, water or combination thereof.

The reactive gas process can be carried out in a plasma reactor. For illustration purposes a suitable reactor for carrying out the reactive gas plasma modification process is as follows. The reactor includes a vacuum chamber in a containment vessel such as a stainless steel or glass bell jar. In the vacuum chamber are two electrodes which can be screen, coil or plate material that has good electrical conductivity such as stainless steel, platinum, graphite or the like.

One electrode, that is the anode, is grounded and the other electrode, that is the cathode, is connected to an external power supply which may be either DC or AC current, so that there exists a voltage potential, from about .5 volts to about 1000 volts, preferably about 10 volts to about 300 volts between the electrodes with an alternating current from about 150kHz to about 2 GHz, preferably about 1 MHz to about 50 MHz.. The interelectrode gap is from about 0.6cm ($\frac{1}{4}$ inch) to about 60cm (2 feet) and preferably from about 2.5cm (1 inch) to about 13cm (5 inches).

The vacuum chamber has an inlet opening to allow the gas to enter into the vacuum chamber. An outlet on the vacuum chamber allows for the evacuation of the vacuum chamber by being connected to a mechanism such as a pump to remove the gas plasma.

In carrying out the surface modification treatment of the plastic substrate the plastic sheet material is placed on the anode. The vacuum chamber is then evacuated to a pressure of about 0.13Pa ($10^{-3}$ torr) to about 1.3 x $10^{-8}$ ($10^{-10}$ torr). The gas enters the inlet at a partial pressure of greater than about 0.13Pa (1 millitorr) up to about 1.3 x $10^3$ Pa (10 torr). The gas becomes a vapor plasma by employing a voltage to cause an electrical breakdown of the gas state to a plasma state. A plasma of the reactive gas is initiated between the electrodes by energizing the power source from about 10 watts to about 10 kwatts. The discharge duration, is generally from about 1 min. to about 20 mins. depending on the power, pressure and desired extent of surface modification. After the reaction, the discharge is extinguished by turning off the power supply and the vacuum chamber is evacuated to a base vacuum of about 10-3 torr to about 10-10 torr. The vacuum chamber is brought up to atmospheric pressure by bleeding in a cleansing gas such as nitrogen gas into an inlet. The treated plastic substrate can be stored with or without a protective covering such as aluminum foil and placing them on a shelf or in a controlled atmosphere such as a dry box.

The surface treated plastic is then coated with a high nitrile coating composition.

The photocurable coating compositions of the instant invention are the reaction products of the high nitrile resins, photopolymerizable solvents and photoinitiators. The coating compositions of the present invention contain high nitrile resins in at least from about 10 percent to about 60 percent of the total weight. More preferably, the coating compositions contain high nitrile resins in from about 20 percent to about 55 percent, and most preferably from about 30 percent to 50 percent of the total weight.

In the practice of this invention any of the high nitrile resins can be employed either alone or in combination. High nitrile resins used in this invention comprise, by weight, about 40 to about 90 percent nitrile monomer, about 5 to about 40 percent monovinyl monomer, and about 1 to about 30 percent rubber component.

The high nitrile resins useful can be prepared by any method known in the art. Preferably, these high nitrile resins are prepared by polymerization in an emulsion of a major portion of an olefinically unsaturated monovinyl nitrile, a second monovinyl monomer component copolymerizable therewith and a preformed

rubber component. The preparation of typical high nitrile resins are more fully described in U.S. Patent No. 4,379,875 which is herein incorporated.

The preferred high nitrile resins comprise a copolymer produced by the polymerization of a major portion of a vinyl-mono-unsaturated nitrile and a minor portion of a second monovinyl monomer component.

The olefinically unsaturated nitriles used are the alpha, beta-olefinally unsaturated mononitriles having the structure:

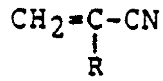

wherein R is hydrogen, a lower alkyl group having from 1 to 4 carbon atoms or a halogen. Such compounds include acrylonitrile, alpha-chloroacrylonitrile, alpha-fluoroacrylonitrile, methacrylonitrile, ethacrylonitrile and the like. The most preferred olefinically unsaturated nitriles useful in the present invention are acrylonitrile, methacrylonitrile and mixtures thereof.

The monovinyl monomer component copolymerizable with the olefinically unsaturated nitrile includes one or more of the esters of olefinically unsaturated carboxylic acids, vinyl esters, vinyl ethers, alpha-olefins, vinyl aromatic monomers and others.

The esters of olefinically unsaturated carboxylic acids include those having the structure:

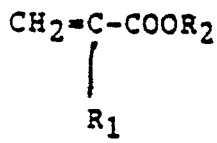

wherein $R_1$ is hydrogen, an alkyl group having from 1 to 30 carbon atoms, or a halogen, and $R_2$ is an alkyl group having from 1 to 6 carbon atoms. Compounds of this type include but are not limited to methyl acrylate, ethyl acrylate, the propyl acrylates, the butyl acrylates, the amyl acrylates, the hexyl acrylates, methyl methacrylate, ethyl methacrylate, the propyl methacrylates, the butyl methacrylates, the amyl methacrylates, the hexyl methacrylates, methyl alpha-chloroacrylates, ethyl alpha-chloroacrylates, acrylic acid, methacrylic acid and the like. Most preferred are methyl acrylate, ethyl acrylate, methyl methacrylate, ethyl methacrylate, acrylic acid and methacrylic acid.

The alpha-olefins useful in the present invention are those having at least 4 and as many as 10 carbon atoms having the structure:

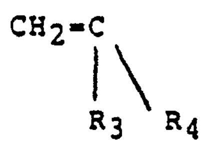

wherein $R_3$ and $R_4$ are alkyl groups having from 1 to 7 carbon atoms. Representative compounds include isobutylene, 2-methyl butene-1, 2-methyl pentene-1, 2-methyl hexene-1, 2-methyl heptene-1, 2-methyl octene-1, 2-ethyl butene-1, 2-propyl pentene-1 and the like. Most preferred is isobutylene.

The vinyl ethers include methyl vinyl ether, ethyl vinyl ether, propyl vinyl ethers, the butyl vinyl ethers, methyl isopropenyl ether, ethyl isopropenyl ether and the like. Most preferred are methyl vinyl ether, ethyl vinyl ether, the propyl vinyl ethers and the butyl vinyl ethers.

The vinyl esters include vinyl acetate, vinyl propionate, the vinyl butyrates and the like. Most preferred is vinyl acetate.

The vinyl aromatic monomers include styrene, alpha-methyl styrene, the vinyl toluenes, the vinyl xylenes, indene and the like. Most preferred are styrene and indene.

The high nitrile resin is optionally in the presence of rubber component which may be a homopolymer or copolymer of a conjugated diene monomer.

The conjugated diene monomer useful in the present invention include butadiene-1,3; isoprene; chloroprene; bromoprene; cyanoprene; 2,3-dimethyl butadiene-1,3; 2-ethyl butadiene-1,3; 2,3-diethyl butadiene-1,3 and the like. Most preferred are butadiene-1,3 and isoprene because of their ready availability and their excellent polymerization properties.

The conjugated diene monomer may be copolymerized with a comonomer selected from the group consisting of vinyl aromatic monomer, an olefinic nitrile monomer having the structure:

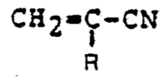

wherein R has the foregoing designation, and an ester having the structure:

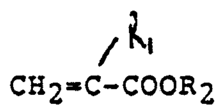

wherein $R_1$ and $R_2$ have the foregoing designations. The rubber component contains from 50 percent to 100 percent by weight of polymerized conjugated diene monomer and from 0 percent to 50 percent by weight of a comonomer.

Preferred high nitrile resins useful in the coating compositions of this invention are those prepared by the polymerization of;

100 parts by weight of (A) from 60 percent to 90 percent by weight of at least one nitrile having the structure:

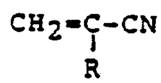

wherein R has the foregoing designation, and (B) from 10 percent to 40 percent by weight based on the combined weights of (A) and (B) of at least one member selected from the group consisting of (1) an ester having the structure:

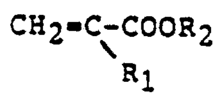

wherein $R_1$ and $R_2$ have the foregoing respective designations, (2) an alpha-olefin having the structure:

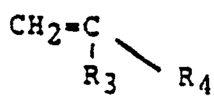

wherein $R_3$ and $R_4$ have the foregoing respective designations, (3) a vinyl ether selected from the group consisting of methyl vinyl ether, ethyl vinyl ether, the propyl vinyl ethers, and the butyl vinyl ethers, (4) vinyl acetate, (5) styrene, and (6) indene,

in the presence of from 1 to about 40 parts by weight of (C) a rubber of a conjugated diene monomer selected from the group consisting of butadiene and isoprene and optioncally a comonomer selected from the group consisting of styrene, a nitrile monomer having the structure:

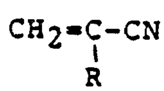

wherein R has the foregoing designation, and an ester having the structure:

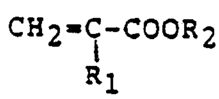

wherein $R_1$ and $R_2$ have the foregoing respective designations, said rubbery polymer containing from about 50 percent to about 100 percent by weight of polymerized conjugated diene and from about 0 percent to about 50 percent by weight of a comonomer.

Most preferred high nitrile resins those prepared by the polymerization of more than about 70 parts by weight of a monounsaturated nitrile and less than about 30 parts by weight of a monovinyl monomer component copolymerizable with said nitrile in the presence of a preformed rubber of a conjugated diene.

The second component of the coating compositions of the present invention is a photopolymerizable solvent. The solvents are any which are compatible with the high nitrile resin components and are generally well-known in the art. During photocure polymerization is triggered photochemically by exposure to irradiation. The coating compositions are classified as 100 percent solids because the photopolymerizable solvent crosslinks and is incorporated into the coating. Minor amounts of other solvents may optionally be used which may be volatile, which does not defeat the object of this invention, to provide a substantially 100% solid coating composition.

These photopolymerizable solvents can be employed either alone or in combination. The coating compositions generally contain, in percent of the total weight, from about 30 percent to about 99 percent, preferably from about 40 percent to about 80 percent and most preferably from about 50 percent to about 75 percent the photopolymerizable solvent.

Types of suitable photopolymerizable solvents include acrylates, olefinically unsaturated carboxylic acids and their anhydrides, vinyl esters, vinyl halides, vinyl cyanides, vinyl amides, vinyl amines, olefins and others.

Acrylates useful as the photopolymerizable solvent include but are not limited to mono or di(meth) acryltes or their esters that can be substituted such as alkyl, cycloalkyl, glycidyltetrahydrofurfuryl, allyl, hydroxyalkyl, and further include alkene gycol acrylate, polyoxyalkylene glycol acrylate, trimethyl propane acrylate, pentaerythyritol acrylate and cyanoethylacrylate. Most preferred are alkyl acrylate, cycloalkyl acrylate, glycidyltetrahydrofurfuryl acrylate and cyanoethylacrylate.

The alpha, beta olefinically unsaturated carboxylic acids and their anhydrides useful as the photopolymerizable solvent include but are not limited to acrylic acid; methacrylic acid; alpha chloro, bromo or cyanoacrylic acid; maleic acid; maleic anhydride; alpha-chloro maleic acid; dichloromaleic anhydride; itaconic acid and scorbic acid. Most preferred are acrylic acid and methacrylic acid.

The vinyl esters useful as the photopolymerizable solvent include but are not limited to methylvinyl ether, ethylvinyl ether, propylvinyl ether, butylvinyl ether, amylvinyl ether, hexylvinyl ether, cyclohexylvinyl ether, phenylvinyl ether, heptylvinyl ether and octylvinyl ether. Most preferred are methylvinyl ether and ethylvinyl ether.

The vinyl halides useful as the photopolymerizable solvent include but are not limited to vinylchloride, vinylbromide, vinylfluoride, vinylidene chloride, vinylidene bromide, vinylidene fluoride, dichloro-difluoroethylene, chlorotrifluoroethylene, trifluoroethylene and chloroprene. Most preferred are vinylchloride and vinylidene chloride.

The vinyl cyanides useful as the photopolymerizable solvent include but are not limited to acrylonitrile, methacrylonitrile, maleic dinitrile, fumaronitrile and vinylidene cyanide. Most preferred are acrylonitrile and methacrylonitrile.

The vinylamides useful as the photopolymerizable solvent include but are not limited to acrylamide, N-methylacrylamide, N,N-dimethylacrylamide, N,N dimethylemethacrylamide, N-t-butylacrylamide, N-dodecyl acrylamide, N-phenyl acrylamide, N-vinyl acrylamide, N-N-methylenebisacrylamide, dimethylforamide and diethyl-formamide. Most preferred are N,N dimethylmethacrylamide, N,N-methylenebisacrylamide and N,N dimetthylacrylamide.

The vinyl amines useful as the photopolymerizable solvent include but are not limited to N-vinyl piperidine and vinyl pyridine.

The olefins useful as the photopolymerizable solvent include but are not limited to ethylene, propylene, butylenes, amylenes, hexylenes, heptenes, octylenes, 1,3-butadiene, isoprene, styrene, alpha-methylstyrene, and alpha-chlorostyrene. Most preferred are styrene and alpha-methylstyrene.

Other exemplary typical photopolymerizable solvents are N-vinyl pyrrolidone, styrene, N-methyl pyrrolidone, ethylene carbonate, gamma-butyrolactone, and dimethylsulphone. The most preferred are N-vinyl pyrrolidone, gamma butyrolactone, and styrene.

The third component of the coating composition of the present invention is the photoinitiator. During cure the photoinitiators absorb actinic radiation, forming reactive free radical intermediates that react further with the photopolymerizable solvent and resin. A general discussion of chemical reaction initiators is available in Kirk-Othmer, Encyclopedia of Chemical Technology, Vol. 13, pp. 355-373, "Initiators", John Wiley and Sons, 1978. These photoinitiators can be employed either alone or in combination in an amount

sufficient to effect the photocure of the coating composition upon irradiation. The coating composition generally contains, in percent of the total weight, from about 0.1 percent to about 10 percent by weight, preferably from about 0.1 percent to about 5 percent by weight, and most preferably from about 0.5 percent to about 2 percent by weight, of the photoinitiator.

The photoinitiator additives are generally well known in the art. Examples of suitable photoinitiators include acetophenone derivatives, azo compounds, benzoin derivatives, amines and their derivatives, anthraquinone derivatives, dibenzyl ketones, benzophenone derivatives, benzoin alkyl ethers and the like. Particular non-limiting examples of the photoinitiators include benzophenone, benzil, benzoin ethyl ether, and azobisisobutyronitrile. Most preferred is benzophenone and ethyl diethanolamine or similar amines.

It will be readily apparent to those skilled in the art that the coating composition may be further modified by the addition of the plasticizers, stabilizers, pigments, dispersants, defoamers, surfactants, extenders, fillers, reinforcing agents and other film formers. The coating compositions of the instant invention may also optionally contain various flattening agents, surface active agents, thixotropic agents, UV light absorbers, flow control agents, viscosity agents, antioxidant agents and dyes. All these additives and the use thereof are well known in the art and do not require extensive discussion, it being understood that any compound possessing the ability to function in such a manner, i.e., as a flattening agent, surface active agent, UV light absorber an the like, can be used so long as they do not deleteriously affect the photocuring of the coating composition and do no adversely affect the characteristics of the coating.

The photocurable coating compositions are first compounded by adding together the photopolymerizable solvents to form a homogeneous mixture, to which is then added the high nitrile resin, forming a mixture. To this mixture is added the photoinitiators, preferably in the dark, with stirring. Optionally, at any step prior to the photocure in the process, any of the aforementioned additives may be stirred into the mixture. The various components are thoroughly mixed so as to form a generally homogeneous coating composition.

A thin, relatively uniform film of coating composition is applied onto the modified plastic substrate by any of the known means such as Guardco™ wet film applicator rods, knife, bar, airless spraying, dipping, roller coating, flowing, brushing, conventional and/or electrostatic spray gun, electrodeposition, and the like. Generally, the coating composition is applied in an amount sufficient to provide a dry cured coating thickness of from about 0.05 mil to about 5 mil, preferably from about 0.1 mil to about 3 mil. Optionally, multiple costs of the composition may be applied to the substrate.

The coating composition is then cured at ambient temperature by irradiation to the desired level of tackiness and preferably to a tack free coating. The light source preferably emits wavelengths in the spectrum from about 2,200 A to about 14,000 A. Optionally, the light source includes light having a substantial ultraviolet spectrum from about 2,200 A to about 4,000 A. The systems used to generate ultraviolet radiation for the photopolymerization reaction can be any known in the art such as low pressure, medium pressure, high pressure, super high pressure, mercury lamps, mercury, carbon and plasma arc lamps; xenon lamps; UV light emitting diodes; UV emitting lasers and the like. The photopolymerizable coating compositions can also be cured using an electron beam apparatus.

## Specific Embodiments

The following examples further illustrate the present invention. These embodiments are presented by way of example and not by way of limitation of the scope of this invention. Further, it is understood that variations and modifications can be made by one skilled in the art without departing from the spirit and scope of the invention.

## Plasma Reactor

The plasma reactor used to modify the plastic surfaces had a parallel-plate diode configuration. The plasma reactor system is essentially a containment chamber containing a vacuum chamber and electrodes attached to a power supply for initiating a plasma state of the reactive gas.

Two electrodes were placed in the stainless steel bell jar reactor, one was a lower grounded anode made of stainless steel and about six inches in diameter and the other was an upper cathode made of stainless steel, about 5 inches in diameter connected to about 13.56 MHz external power supply. The inter-electrode gap was about 1 inch.

The stainless steel bell jar reactor had a volume of about 54 liters which was connected by molecular

sieve traps to a mechanical pump and had a base vacuum about $10^{-4}$ torr. The stainless steel bell jar reactor had a vial attached to the inlet which held the starting material which evaporated into the reactor as the vapor feed gas. A flow controller attached to the vial controlled the delivery rate of feed gas into a plasma. The reaction pressure was established and maintained by an automatic throttle plate located between the reactor and the pump.

Plasma Reaction Procedure

The sample was placed on the anode in the plasma diode configuration and then the reaction chamber was evacuated to a base vacuum of about $10^{-4}$ torr. The plasma conditions for samples 1-12 and 17-22 were a pressure of about 130 Mtorr to about 140 Mtorr, a vapor flow rate of about 45 SCCM, and a power level of about 180 watts to about 190 watts. The plasma condition for samples 13-16 and 23-30 were a pressure of about 130 Mtorr to about 140 Mtorr, a vapor flow rate of about 45 SCCM and a power level of about 100 watts.

A plasma was ignited by turning on the cathode power and the power level was adjusted to the desired level. The discharge duration was for about 5 min. for samples 7-16, and 23-26 and about 10 min. for samples 1-6, 17-22 and 27-30. The discharge was then extinguished and the reactor was evacuted to a base vacuum of about $10^{-4}$ torr. The reactor was brought up to atmospheric pressure with nitrogen gas and the treated samples were removed and stored at room temperature.

Plastic Sample

A polycarbonate sample packaged in clear protective film on one face and blue or green protective film on the other face. Either the clear or blue film was removed and then that side of the polycarbonate was placed on the lower electrode and treated. Samples 1-3, 10-15, 20-24, 27 and 28 had the clear face treated and samples 4-9, 16-19, 25, 26, 29 and 30 had the blue face treated.

Coating Composition

The coating composition was prepared by mixing together about 40g of Barex$^R$ 210$^R$ resin (available from The Standard Oil Chemical Company, Cleveland, Ohio) about 60g of gamma- butyrolactone, about 1g benzophenone, about 1g ethyldiethanolamine and about 1g Iracure™ (available from Ciba Geigy Inc.) until a homogeneous mixture resulted.

Test Process

The high nitrile coating composition was applied to plasma treated surfaces of polycarbonate using a Gardco™ drawbar (Paul N. Gardner, Lauderdale-By-The-Sea, Florida).

The comparative examples No. A-D had the high nitrile coating composition applied onto the surface of polycarbonate that was not plasma treated using #8 Gardco™ drawbar.

The coating was radiation cured to a tack free coating by using a Salisbury Engineering model UVCC-5M conveyor system with a lamp setting of 200 w/in and the following parameters for samples 1, 4, 7, 10, 17 and 20 and comparative samples A and B a speed setting of 10 with 5 passes, for samples 2, 5, 8, 11, 13, 15, 18, 21, 23, 25, 27 and 29, a speed setting of 10 with 10 passes and for samples 3, 6, 9, 12, 14, 16, 19, 22, 24, 26, 28, 30 and comparative samples C and D a speed setting of 20 with 10 passes.

Adhesion Test

Adhesion Test A - Samples were scribed with a sharp tool in the coated substrate. A tool was used to attempt to lift the nitrile film off the coated plastic substrate sample. If the nitrile film was removed the rating of fail was given and if the nitrile film was not remove a pass rating was given.

The adhesion tape test (ASTMD-3359) was also carried out by cutting about a 5" by about 5" square grid out with a metal cutting wheel into the center area of the coating on the plastic substrate. Adhesive

tape was then applied to the grid and used to lift off the grid. The results of the adhesion test are shown in Table I. Adhesion was assessed according to the percent of coating remaining on the plastic substrate following the tape peel, with no adhesion being 0% and 100% adhesion being no loss of coating. The results of the adhesion tape test are shown in Table I.

The instant invention demonstrates the excellent adherence of high nitrile coating composition onto polycarbonate plasma modified substrates. The polycarbonate substrate-samples treated with oxygen and/or water vapor plasma prior to coating the polycarbonate resulted in excellent adhesion and the majority of samples gave 100% adhesion. The degree of adhesion is further dependent upon the plasma conditions of pressure, power, flow rate and treatment time. In contrast comparative samples A-D which had no plasma treatment of the polycarbonate prior to coating with a high nitrile resin resulted in 0% adhesion.

TABLE I

Polycarbonate Sheets Coated with High Nitrile Composition

| Sample | Plasma Gas | Adhesion Test A | Adhesion Test ASTM (%) |
|---|---|---|---|
| 1 | $H_2O$ | Pass | 70 |
| 2 | $H_2O$ | Pass | 70 |
| 3 | $H_2O$ | Pass | 100 |
| 4 | $H_2O$ | Pass | 100 |
| 5 | $H_2O$ | Pass | 100 |
| 6 | $H_2O$ | Pass | 100 |
| 7 | $H_2O$ | Pass | 100 |
| 8 | $H_2O$ | Pass | 100 |
| 9 | $H_2O$ | Pass | 100 |
| 10 | $H_2O$ | Pass | 100 |
| 11 | $H_2O$ | Pass | 80 |
| 12 | $H_2O$ | Pass | 95 |
| 13 | $H_2O$ | Pass | 100 |
| 14 | $H_2O$ | Pass | 100 |
| 15 | $H_2O$ | Pass | 100 |

| | | | |
|---|---|---|---|
| 16 | $H_2O$ | Pass | 100 |
| 17 | Oxygen | Pass | 100 |
| 18 | Oxygen | Pass | 100 |
| 19 | Oxygen | Pass | 100 |
| 20 | Oxygen | Pass | 100 |
| 21 | Oxygen | Pass | 100 |
| 22 | Oxygen | Pass | 90 |
| 23 | Oxygen | Pass | 0 |
| 24 | Oxygen | Pass | 0 |
| 25 | Oxygen | Pass | 50 |
| 26 | Oxygen | Pass | 50 |
| 27 | Oxygen | Pass | 90 |
| 28 | Oxygen | Pass | 50 |
| 29 | Oxygen | Pass | 100 |
| 30 | Oxygen | Pass | 0 |
| A | None | Pass | 0 |
| B | None | Fail | 0 |
| C | None | Pass | 0 |
| D | None | Pass | 0 |

## Claims

1. A process to adhere nitrile films or coatings onto a plastic material comprising subjecting the surface of a plastic material selected from the group consisting of polycarbonate, polybutadiene, rubber, polyethylene, polypropylene, polytetraflouroethylene, polyacrylonitrile, polyvinylchloride, polyvinylacetate, polymethylmethacrylate, polystyrene, cellophane, cellulose acetate comonomer, polyamides, polybutylene, polyester, and combinations thereof to a reactive gas plasma selected from the group consisting of water, oxygen, hydrogen and combinations thereof, in a containment vessel containing a vacuum chamber containing an anode and cathode, and wherein said plastic is in contact with said anode and further wherein said reactive vapor plasma is initiated by evacuating the vacuum chamber to a pressure of 0.13Pa ($10^{-3}$ torr) to about 1.3 x $10^{-8}$Pa ($10^{-10}$ torr) and applying a voltage of about 0.5 volts to about 1000 volts with an alternating current of about 150kHz to about 2 GHz such that the net power generated is about 10 watts to about 10 kilowatts power between the cathode and the anode and further wherein the treatment time is about 1 minute to about 60 minutes to surface modify the plastic;
applying a nitrile composition onto the surface of the modified material; and
curing the nitrile composition by irradiation wherein the irradiation is in the range from about 2200Å to about 14,000Å.

2. A process according to claim 1 wherein said reactive gas plasma is selected from the group consisting of water, oxygen and combinations thereof.

3. A process according to claim 1 wherein said reactive gas plasma is water.

4. A process according to claim 1 wherein said reactive gas plasma is oxygen.

5. A process according to any one of claims 1 to 4, wherein said treatment time is from about 1 minute to about 20 minutes.

6. A process according to any one of claims 1 to 5, wherein said voltage is from about 10 volts to about 300 volts.

7. A process according to any one of claims 1 to 6 wherein said alternating current is from about 1 MgHz to about 50 MgHz.

8. A process according to any one of claims 1 to 7 wherein the interelectrode gap is from about 0.6cm to about 60cm.

9. A process according to any one of claims 1 to 8, wherein the nitrile coating comprises the reaction products of a high nitrile resin, photopolymerizable solvent and photoinitiators.

10. A process according to any one of claims 1 to 9 wherein the nitrile composition is radiation cured at ambient temperature to produce a tack free coating.

11. A process according to any one of claims 1 to 10 wherein the irradiation comprises wavelengths from about 2,200 Å to about 4,000 Å.